# EUROPÄISCHE PATENTSCHRIFT

(11) **EP 0 980 206 B1**
(45) Veröffentlichungstag und Bekanntmachung des Hinweises auf die Patenterteilung: **08.01.2003**
(21) Anmeldenummer: 98918962.6
(22) Anmeldetag: 11.05.1998
(51) Int. Cl.: A21B 5/02

(54) **BACKOFEN FÜR DIE HERSTELLUNG VON DÜNNWANDIGEN FORMKÖRPERN MIT JEWEILS AUS ZWEI FORMHÄLFTEN BESTEHENDEN, AUF- UND ZUMACHBAREN BACKFORMEN**
BAKERS' OVEN FOR PRODUCING THIN-WALLED SHAPED PRODUCTS WITH BAKING FORMS EACH CONSISTING OF TWO FORM HALVES WHICH OPEN AND CLOSE
FOUR POUR LA PRODUCTION DE CORPS MOULES A PAROI MINCE AVEC DES MOULES DE CUISSON OUVRANTS ET FERMANTS CONSTITUES DE DEUX DEMI-MOULES

(30) Priorität: 09.05.1997 AT 78997
(43) Veröffentlichungstag der Anmeldung: 23.02.2000
(73) Patentinhaber: Franz Haas Waffelmaschinen- Industrie Aktiengesellschaft, 1210 Wien (AT)
(72) Erfinder: HAAS, Franz, sen., A-1210 Wien (AT); HAAS, Johann, A-3400 Klosterneuburg (AT); SACHSENHOFER, Johann, A-1220 Wien (AT)
(74) Vertreter: Puchberger, Peter, Dipl.-Ing.
(86) Internationale Anmeldenummer: AT9800121
(87) Internationale Veröffentlichungsnummer: WO98051156

(56) Entgegenhaltungen:
- WO-A-95/26635
- DE-C- 714 019

## Beschreibung

### Technisches Gebiet:

Die Erfindung bezieht sich auf Backöfen, durch die jeweils aus zwei Formhälften bestehende, auf- und zumachbare Backformen transportiert werden, in die im geöffneten Zustand Vorprodukte eingebracht werden, die in den geschlossenen Backformen in dünnwandige Formkörper umgewandelt werden, die in ihrer Gestalt jeweils dem von den beiden Formhälften einer geschlossenen Backform begrenzten Formhohlraum entsprechen.

Als Vorprodukte können formlose Massen eingesetzt werden, die sich in den geschlossenen Formen zu dünnwandigen Formkörpern verfestigen, oder formlose Backmassen, die in den geschlossenen Formen zu dünnwandigen Formkörpern gebacken werden. Als formlose Backmassen können für den menschlichen Genuß bestimmte Teige eingesetzt werden, beispielsweise zuckerfreie oder Zucker enthaltende Waffelteige, die in den Formen, je nach Teigrezeptur, zu knusprigen spröden Waffeln oder zu weichen Waffeln gebacken werden, oder andere bei der Herstellung von Süßwaren oder nicht süssen Backwaren verwendete Backteige. Als formlose Backmassen können auch für den menschlichen Genuß ungeeignete, auf Stärkebasis hergestellte Backmassen eingesetzt werden, die in den Formen zu verrottbaren Verpackungstassen oder zu anderen verrottbaren, Stärke enthaltenden Verpackungsprodukten gebacken werden.

Als Vorprodukte können auch in die herzustellenden dünnwandigen Formkörper zu integrierende, vorgeformte Formkörper eingesetzt werden, die zusammen mit einer formlosen Masse in die Formen eingebracht werden, oder vorgeformte Formkörper, die in den geschlossenen Formen eine neue Gestalt erhalten. Die vorgeformten Formkörper können selbst dünnwandige Formkörper sein, die aus formlosen Massen hergestellt wurden.

### Stand der Technik:

Bei bekannten langgestreckten Backöfen für die Herstellung von dünnwandigen Formkörpern aus formlosen Massen sind die auf- und zumachbaren Backformen zur Herstellung der Formkörper in 18 bis 140 auf- und zumachbaren Backzangen enthalten, wobei jede Backform mit ihren beiden Formhälften in den beiden Zangenhälften einer Backzange aufgenommen ist. Die Backzangen sind zu einer endlosen Kette zusammengeschlossen, die den Vorkopf und den anschließenden Backraum des jeweiligen Backofens kontinuierlich in einer Richtung durchläuft. Beim Passieren des Vorkopfes werden die Backzangen zum Öffnen ihrer Backformen geöffnet, um zuerst den jeweiligen dünnwandigen Formkörper aus den geöffneten Backform zu entnehmen und dann eine dosierte Menge der formlosen Masse in die geöffnete Backform einzubringen. Anschließend werden die Backzangen zum Schließen ihrer Backformen wieder geschlossen. Beim anschließenden Durchlaufen des Backraumes werden die Backformen beheizt und die in den geschlossenen Backformen eingeschlossenen, formlosen Massen zu dünnwandigen Formkörpern gebacken, während die Backformen entgegen dem beim Backen in ihnen entstehenden Innendruck durch die geschlossenen Backzangen geschlossen gehalten werden.

Bei diesen Backöfen erstreckt sich die langgestreckte endlose Backzangenkette in zwei übereinanderliegenden Transportebenen durch den jeweiligen langgestreckten, horizontalen Backraum und wird am hinteren Ende des Backraumes und in dem an das vordere Ende des Backraumes nach vorne anschließenden Vorkopf jeweils von der einen Transportebene in die andere Transportebene umgelenkt.

Jede Backzange ist als eine von außen zu betätigende Maschine ausgebildet, mit deren Hilfe die in ihr enthaltene Backform durch den Backofen transportiert, geöffnet und geschlossen und geschlossen gehalten wird. Beim Durchlaufen des Vorkopfes wird die Backform mit Hilfe ihrer Backzange geöffnet, für kurze Zeit offen gehalten und dann wieder geschlossen. Beim Durchlaufen des Backraumes wird die geschlossene Backform mit Hilfe ihrer Backzange geschlossen gehalten. Die endlose Backzangenkette wird durch einen Antriebsmotor angetrieben, der eine kontinuierliche Umlaufbewegung der Backzangenkette erzeugt. Von dieser Umlaufbewegung werden bei jeder Backzange stets gleichbleibende Bewegungsabläufe abgeleitet, wenn diese im Vorkopf die diesen Bewegungsabläufen jeweils zugeordneten, im Vorkopf stationär angeordneten Steuermechanismen passiert, die in Verbindung mit der Umlaufbewegung der Backzangenkette jeweils den betreffenden Bewegungsablauf der Backzange bzw. ihrer Einzelteile erzeugen.

Beim Durchlaufen des Vorkopfes passieren die geöffneten Backzangen die Produktentnahmestation, in der die gebackenen Formkörper aus den geöffneten Backformen entnommen und über die Ausgabestation des Ofens aus dem Vorkopf ausgegeben werden. Nach der Produktentnahmestation passieren die geöffneten Backzangen die Beschickungsstation, in der die dosierten Mengen der formlosen Masse in die leeren, geöffneten Backformen eingebracht werden. Beim Durchlaufen des langgestreckten, horizontalen Backraumes werden die geschlossenen Backformen in den geschlossenen Backzangen beheizt. In einem mit Gas beheizten Ofen werden die Backformen von außen durch heiße Gase beheizt, die im Backraum des Ofens erzeugt und gegen die Backzangen geleitet werden. In einem elektrisch beheizten Ofen werden die Backformen durch in die Zangenhälften der Backzangen eingebaute elektrische Heizelemente beheizt, die beim Durchlaufen des Backraumes von außen mit elektrischer Energie versorgt werden.

Die dünnwandigen Formkörper werden in aufeinanderfolgenden Backzyklen jeweils in den von den Backzangen durch den Backraum im Kreislauf transportierten Backformen hergestellt. Jeder Backzyklus läuft in der betreffenden Backform auf ihrem Weg von der Beschickungsstation durch den Backraum zur Produktentnahmestation ab. Bei jedem einzelnen Backzyklus wird in der Beschickungsstation eine formlose Masse in die, vorher mit Hilfe ihrer Backzange geöffnete Backform eingebracht, die Backform mit Hilfe ihrer Backzange geschlossen und geschlossen gehalten bis sie vor dem Erreichen der Produktentnahmestation mit Hilfe ihrer Backzange wieder geöffnete wird und der dünnwandigen Formkörper aus der offenen Backform entnommen wird.

Wenn die offene Backform von ihrer Backzange neuerlich zur Beschickungsstation transportiert wird, beginnt in dieser Backform der nächste Backzyklus zur Herstellung eines dünnwandigen Formkörpers.

Bei jedem Backzyklus wird die in der geschlossenen Backform eingeschlossene formlose Masse durch den ablaufenden Backprozeß in der von außen durch die Backzange geschlossen gehaltenen Backform verteilt, aufgeschäumt und unter Druck zu einem geschäumten, dünnwandigen Formkörper ausgebacken. Die äußere Gestalt des entstandenen dünnwandigen Formkörpers wird an seiner Oberseite durch die Oberflächengestaltung der Backfläche der oberen Formhälfte der Backform und an seiner Unterseite durch die Oberflächengestaltung der Backfläche der unteren Formhälfte der Backform bestimmt. Die Wandstärke des entstandenen dünnwandigen Formkörpers wird durch den bei geschlossener Backform vorhandenen, gegenseitigen Abstand dieser beiden, einander zugewandten Backflächen bestimmt. Die Ausbildung des äußeren Randes des entstandenen dünnwandigen Formkörpers wird durch die seitliche Begrenzung des Formhohlraumes der geschlossenen Backform bestimmt.

Bei geschlossener Backform und geschlossener Backzange liegen die beiden Zangenhälften und die beiden Formhälften einander gegenüber. Die Zangenhälften stützen sich mit einander gegenseitig zugeordneten Anschlägen aneinander ab. Die an den Vorderseiten der Formhälften angeordneten Backflächen sind einander zugewandt und liegen einander in einem vorgegebenen Abstand gegenüber. Diese beiden; im wesentlichen horizontal angeordneten Backflächen begrenzen zwischen sich den Formhohlraum der geschlossenen Backform, der, je nach dem in der Backform als dünnwandigen Formkörper herzustellenden Produkt, seitlich offen ist oder durch an den Vorderseiten der Formhälften angebrachte Dichtleisten rund um seitlich begrenzt, aber nicht gasdicht abgeschlossen ist. In diesem Formhohlraum wird eine dosierte Menge der formlosen Masse unter Druck zu einem dünnwandigen Formkörper gebacken. Die beim Backen im Formhohlraum entstehenden Backgase bringen die formlose Masse zum Schäumen, verteilen sie im Formhohlraum und strömen zwischen den beiden Backflächen seitlich aus dem Formhohlraum der geschlossenen Backform und damit aus der geschlossenen Backzange in den Backraum des jeweiligen Backofens.

Bei geschlossener Backform und geschlossener Backzange erzeugen die Backgase im Formhohlraum der Backform einen Innendruck, der über die Backflächen auf die Formhälften und von diesen auf die Zangenhälften der Backzange übertragen wird. Diesem Innendruck wirken jeweils die geschlossenen Backzangen entgegen, die während ihres Umlaufes, je nach Backzange und Backform, jeweils durch das Eigengewicht ihrer Zangenhälften oder durch von außen auf sie einwirkende stationäre Niederhalter oder durch an ihren Zangenhälften seitlich angebrachte Backzangenverschlüsse geschlossen gehalten werden und dadurch verhindern, daß ihre mit ihren Anschlägen aneinanderliegenden Zangenhälften durch die Backgase auseinanderbewegt werden.

Der durch die Backgase erzeugte Innendruck steigt in der Anfangsphase des Backprozesses durch die sehr heftige Gasentwicklung an und fällt mit dem fortschreitenden Austritt der Backgase aus dem Formhohlraum wieder ab. Das dabei auftretende Druckmaximum des Innendruckes hängt hauptsächlich von der Ausbildung der seitlichen Begrenzung des Formhohlraumes ab und ist daher bei einem seitlich völlig offenen Formhohlraum deutlich kleiner, als bei einem seitlich rundum durch Dichtleisten begrenzen Formhohlraum, den die Backgase nur durch die wenigen Dampfschlitze der Dichtleisten verlassen können.

Bei einer Backzange, deren gelenkig miteinander verbundenen Zangenhälften die Formhälften einer Backform enthalten, die im geschlossenen Zustand einen seitlich offenen Formhohlraum begrenzt, in dem der Innendruck beim Backen nur geringfügig ansteigt, wird die Backform durch das Eigengewicht der jeweils über dem Formhohlraum liegenden Zangenhälfte bzw. durch einen stationären Niederhalter geschlossen gehalten, der ein Auseinanderbewegen der Zangenhälften einer ihn passierenden Backzange verhindert.

Backzangen, deren Zangenhälften die Formhälften von Backformen enthalten, die im geschlossenen Zustand jeweils einen seitlich rundum durch Dichtleisten begrenzten Formhohlraum begrenzen, in dem der Innendruck beim Backen stark ansteigt, werden an zwei einander gegenüberliegenden Seiten der jeweiligen Backzange seitlich geschlossen gehalten. Bei gelenkig miteinander verbundenen Zangenhälften ist auf der dem Gelenk der Backzange gegenüberliegenden Seite ein Backzangenverschluß vorgesehen, der bei geschlossener Backzange verriegelt wird. Bei gelenklosen Backzangen, deren Zangenhälften zum Öffnen und Schließen der Backform geradlinig zueinander und auseinander bewegt werden, ist an zwei einander gegenüberliegenden Seiten der Backzange jeweils ein Backzangenverschluß vorgesehen, der bei geschlossener Backzange verriegelt wird. Jeder Backzangenverschluß ist ein in die jeweilige Backzange eingebauter, bei geschlossener Backzange von außen zu betätigender Mechanismus, der in seinem verriegelten Zustand die beiden Zangenhälften starr miteinander verbindet. Jeder Backzangenverschluß muß nach dem Schließen der Backzange und vor dem Öffnen der Backzange betätigt werden.

Bei den bekannten Backöfen sind in die Backzangen bzw. in deren Zangenhälften ebene Backplatten eingebaut bzw. integriert, die an der Vorderseite jeweils als obere bzw. untere Formhälfte der Backformen ausgebildet sind und an der Rückseite beheizt werden.

Die bekannten langgestreckten Backöfen mit ihren kontinuierlich umlaufenden Backzangenketten sind in Konstruktion, Aufbau und Funktionsweise, von der Beschickungsstation über die einzelnen Backformen und die sie enthaltenden umlaufenden Backzangen bis zu den stationären Steuermechanismen zum Erzeugen der Bewegungen der einzelnen Teile der umlaufenden Backzangen und zur Ausgabestation für die dünnwandigen Formkörper, jeweils speziell darauf abgestellt, ausschließlich dünnwandige Formkörper mit nur einer einzigen vorgegebene Gestalt aus formlosen Massen herzustellen, die nach einem bestimmten Rezept zubereitet sind.

Solche Backöfen werden für die industrielle Herstellung von eßbaren Waffeln eingesetzt, die in den umlaufenden Backformen der Backzangen aus flüssigen Waffelteigen gebacken werden, die hauptsächlich aus Weizenmehl und Wasser bestehen. Je nach Backofen und Waffelteig können die erzeugten Waffeln ihrer Konsistenz nach knusprige, spröde und leicht zerbrechliche Waffeln sein, die einen Feuchtigkeitsgehalt von maximal 1% - 4% aufweisen, oder ihrer Konsistenz nach weiche elastische Waffeln sein mit einem Feuchtigkeitsgehalt von 8% oder mehr.

Solche Backöfen werden auch für die industrielle Herstellung von flachen verrottbaren Verpackungstassen eingesetzt, die in den umlaufenden Backformen der Backzangen aus gießfähigen, auf Stärkebasis hergestellten, formlosen Massen gebackenen werden und eine elastische Konsistenz mit einem Feuchtigkeitsgehalt von 6% bis 22% aufweisen.

Die bekannten langgestreckten Backöfen mit ihren 18 bis 140 Backzangen enthaltenden, endlosen Backzangenketten sind mechanisch sehr aufwendig gestaltete Backmaschinen. Die Backformen sind in den, aus mehreren Bauteilen zusammengesetzten Backzangen aufgenommen, die mit ihren seitlichen Laufrädern in beiden Transportebenen des Backofens auf seitlichen Laufschienen durch den jeweiligen Backraum laufen. Im Vorkopf sind entlang der Umlaufbahn der Backzangen stationär angeordnete Steuerkurven und Steuermechanismen vorgesehen, die an den vorbeilaufenden Backzangen die Bewegungen der Zangenhälften zum Öffnen und Schließen der Backformen und die Bewegungen der Verschlußorgane der Backzangenverschlüsse zum Verriegeln und Entriegeln der geschlossenen Backzangen erzeugen. Mechanisch aufwendig ist auch die endlose Backzangenkette, für die eine sich am Ofengestell abstützende, pneumatische oder hydraulische Kettenspannvorrichtung erforderlich ist und die zusätzlich zu den Backzangen noch aus zwei seitlichen Transportketten besteht, die die Backzangen untereinander verbinden und über an beiden Enden des Backofens angeordnete Kettenumlenkungen umlaufen.

Bei den bekannten langgestreckten Backöfen für die Herstellung von dünnwandigen Formkörpern zeigt sich die durch die Anzahl ihrer Backzangen bzw. Backformen bestimmte unterschiedliche Kapazität zur Herstellung von dünnwandigen Formkörpern hauptsächlich in der unterschiedlichen Länge der Backöfen bzw. ihrer Backräume. Wenn ein bestehender langgestreckter Waffelbackofen durch einen neuen langgestreckten Backofen mit höherer Kapazität ersetzt werden soll, so ist am Aufstellungsort des Backofens eine längere Stellfläche für den neuen Backofen erforderlich. Bei begrenzten Platzverhältnissen wird die am Aufstellungsort maximal zur Verfügung stehende Länge der Stellfläche sehr rasch zum limitierenden Faktor für jede weitere Kapazitätssteigerung des langgestreckten Backofens und der an ihn angeschlossenen Produktionsanlage zur weiteren Behandlung und Verarbeitung der dünnwandigen Formkörper bis hin zu den am Ende der jeweiligen Produktionsanlage angeordneten Verpackungsmaschine für das aus den dünnwandigen Formkörpern hergestellte Endprodukt.

Aus der DE-PS 714 019 ist eine Waffelbackmaschine bekannt, bei der über seitliche Laufrollen in den Seitenwänden des Maschinengestelles geführte Waffelformkästen vorgesehen sind, die an ihren Ober- bzw. Unterseiten Vertiefungen mit einem der unteren bzw. oberen Seite der herzustellenden Waffel entsprechenden Muster aufweisen und jeweils über ihre Unterseite nach unten vorstehende, seitliche Hakenfallen und diesen zugeordnete, ihrer Oberseite benachbarte Verriegelungsstifte tragen. Diese Formkästen werden in einer unteren Transportebene an der Oberseite mit Backmasse beschickt und am unteren Ende eines, sich durch einen vertikalen Backschacht nach oben zu einer oberen Entnahmestation für die gebackenen Waffeln erstreckenden, sich auf ortsfesten Klinken abstützenden Formkastenstapels fortlaufend zu Backformen zusammengesetzt, die jeweils aus zwei aufeinanderliegenden durch die an den Verriegelungsstiften des unteren Formkastens festgezogenen Hakenfallen des oberen Formkastens starr miteinander verbundenen Formkästen bestehen. Am unteren Ende des Backschachtes wird jeweils ein an der Oberseite mit Backmasse beschickter Formkasten durch einem Winkelhebel eines Schubstangengetriebes von unten in den Backschacht gedrückt und mit dem unterster Formkasten des Formkastenstapels zu einer Backform zusammengesetzt. Dabei wird der gesamte Formkastenstapel von den ortsfesten Klinken abgehoben und um eine Formkastenhöhe angehoben, wobei die Hakenfallen des untersten Formkastens des Stapels an den Verriegelungsstiften des neu hinzugekommenen Formkastens festgezogen werden und dann der gesamte Stapel mit seinem neuen untersten Formkasten wieder auf die ortsfesten Klinken abgesetzt wird. Mit jedem Anfügen eines Formkastens am unteren Ende des Stapels wandern die Backformen im Stapel schrittweise nach oben durch den Backschacht, während in den von ihnen gebildeten Backformen die Waffeln gebacken werden. Durch das Anheben des Stapels werden bei der obersten Backform des Stapels die Hakenfallen des obersten Formkastens von den Verriegelungsstiften des darunterliegenden Formkastens weggeschwenkt und der oberste Formkasten an die beiden, in den Seitenwänden des Maschinengestelles umlaufenden, endlosen Gliederketten eines Endlosförderers angekuppelt, der diesen Formkasten unter Auflösung der obersten Backform vom Formkastenstapel abhebt und durch eine obere Transportebene und eine hintere vertikale Transportstrecke in die untere Transportebene und zurück zum unteren Ende des Backschachtes transportiert, wo dieser Formkasten von den Gliederketten des Endlosförderers wieder abgekuppelt wird. Beim Abheben des obersten Formkasten vom Stapel bleibt die gebackene Waffel auf der Oberseite des darunterliegenden Formkastens liegen und wird in der oberen Entnahmestation durch einen Abstreifer von diesem Formkasten entfernt. Diese Waffelbackmaschine besitzt ein kurzen Backschacht mit einem niedrigen Formkastenstapel, der aus wenigen, relativ dünnwandigen Formkästen besteht, die untereinander über Hakenfallen und Verriegelungsstifte starr miteinander verbunden sind, um den beim Backen der Waffeln in den von den Formkästen gebildeten Backformen auftretenden hohen Innendrücken stand halten zu können.

### Zusammenfassung der Erfindung:

Aufgabe der Erfindung ist es, einen kompakten Backofen für die Herstellung von dünnwandigen Formkörpern in jeweils aus zwei Formhälften bestehenden, auf- und zumachbaren Backformen anzugeben.

Zur Lösung dieser Aufgabe schlägt die Erfindung einen Backofen für die Herstellung von dünnwandigen Formkörpern in jeweils aus zwei Formhälften bestehenden, auf- und zumachbaren Backformen vor, die mit ihren Formhälften die äußere Gestalt der in ihnen hergestellten Formkörper bestimmen. Bei diesem Backofen sind einen geschlossenen Kreislauf durchlaufende, übereinanderstapelbare Backplatteneinheiten vorgesehen, die an ihren Oberseiten die unteren Formhälften der Backformen und an ihren Unterseiten die oberen Formhälften der Backformen tragen und paarweise aufeinanderliegend geschlossene Backformen bilden. Jede Backplatteneinheit wird an ihrer Oberseite in einer unteren Beschickungsstation des Backofens mit Vorprodukt beschickt und dann in einen vertikalen, aus Backplatteneinheiten bestehenden, sich auf einer unteren Haltevorrichtung abstützenden, vertikalen Stapel integriert, der sich durch einen vertikalen Backschacht hindurch nach oben zu einer oberen Entnahmestation für die gebackenen Formkörper erstreckt, Der Stapel wird an seinem oberen Ende fortlaufend in einzelne Backplatteneinheiten aufgelöst und an seinem unteren Ende von einer Stapelvorrichtung durch fortlaufendes Hinzufügen einer mit Vorprodukt beschickten Backplatteneinheit fortlaufend neu gebildet, sodaß die von den Backplatteneinheiten gebildeten Backformen im Stapel schrittweise nach oben und durch den Backschacht wandern, während die in den Backformen enthaltenen Vorprodukte zu dünnwandigen Formkörpern gebacken werden. Dieser Backofen ist erfindungsgemäß dadurch gekennzeichnet, daß die Backplatteneinheiten innerhalb des Stapels nur lose aufeinanderliegen und jede einzelne, von zwei aufeinanderliegenden Backplatteneinheiten gebildete Backform entgegen dem in ihr beim Backen entstehenden Innendruck nur durch das Gewicht des jeweils auf ihr lastenden Teiles des Stapels geschlossen gehalten wird, während sie innerhalb des Stapels schrittweise nach oben, durch den vertikalen Backschacht hindurch zur oberen Entnahmestation wandert.

Die erfindungsgemäße Ausbildung erlaubt eine deutliche Verringerung der Anzahl der ständig zu bewegenden Teile des Backofens durch den Ersatz der sich entlang des Backschachtes erstreckenden Transportvorrichtung durch den sich ständig erneuernden Backformenstapel, der außerhalb des Backschachtes fortlaufend neu gebildet bzw. aufgelöst wird. Der sich ständig erneuernde und nur sein eigenes Gewicht zusammengehaltene Backformenstapel erfordert auch deutlich weniger Wartung als eine sich entlang dem Backschacht erstreckende Transportvorrichtung für die geschlossenen Backformen oder die endlose Backzangenkette eines bekannten langgestreckten Backofens, die in ihren Backzangen die Backformen enthält und mit allen ihren beweglichen Teilen im horizontalen heißen Backraum des Backofens ständig umläuft.

Die erfindungsgemäße Ausbildung des Backofens kommt ohne die bei den bekannten Backöfen zum starren Verbinden der beiden Backformteile notwendigen seitlichen Verriegelungsvorrichtungen und ohne die bei den bekannten Backöfen zum Führen der Backplatteneinheiten innerhalb des Backofens erforderlichen seitlichen Laufräder aus. Bei der erfindungsgemäßen Ausbildung des Backofens besitzt der die geschlossenen Backformen durch den vertikalen Backschacht bewegende, ständig erneuerte Stapel aus beidseitig verwendbaren, stapelbaren Backplatteneinheiten keinerlei bewegte Teile, die durch den Backschacht transportiert werden und wegen der hohen Temperaturen im Backschacht teure Materialien und aufwendige Konstruktionen erfordern würden.

Gemäß einem weiteren Merkmal der Erfindung kann oberhalb des Backschachtes eine Vereinzelungsvorrichtung vorgesehen sein, die nacheinander die Backplatteneinheiten zum Auflösen des Stapels und zum Öffnen der Backformen vom oberen Ende des Stapels abnimmt.

Gemäß einem weiteren Merkmal der Erfindung kann außerhalb des Backschachtes ein eigener, zur Transportrichtung des Stapels gegenläufiger Vertikalförderer zum Rücktransport der Backplatteneinheiten zur unteren Beschickungsstation vorgesehen sein.

Gemäß einem weiteren Merkmal der Erfindung können die Backplatteneinheiten jeweils mit einander gegenseitig zugeordneten oberen bzw. unteren Stapelflächen versehen sein, mit denen sie innerhalb des Stapels lose aufeinanderliegen.

Gemäß einem weiteren Merkmal der Erfindung können an den Oberseiten der Backplatteneinheiten jeweils mehrere, als untere Backformhälften ausgebildete Backformteile nebeneinander und an den Unterseiten der Backplatteneinheiten jeweils mehrere, als obere Backformhälften ausgebildete Backformteile nebeneinander angeordnet sein.

Gemäß einem weiteren Merkmal der Erfindung kann vorgesehen sein, daß die den Oberseiten zugeordneten, oberen Stapelflächen der Backplatteneinheiten jeweils in die Dichtleisten der an den Oberseiten der Backplatteneinheiten angeordneten, unteren Backformhälften integriert sind und daß die den Unterseiten der Backplatteneinheiten zugeordneten, unteren Stapelflächen jeweils in die Dichtleisten der an den Unterseiten der Backplatteneinheiten angeordneten oberen Backformhälften integriert sind, wobei die Backplatteneinheiten innerhalb des von ihnen gebildeten Stapels mit den Dichtleisten ihrer Backformhälften lose aufeinanderliegen.

Die beidseitig verwendbaren, stapelbaren Backplatteneinheiten mit den an ihrer Oberseite bzw. Unterseite angeordneten Backflächen erlauben eine verwindungssteife und biegesteife Gestaltung des die Backflächen an ihren Rückseiten abstützenden Plattenkörpers, wobei die in den Plattenkörper eingelassenen Heizkanäle den Plattenkörper zusätzlich versteifen. Die einander gegenseitig zugeordneten Stapelflächen erlauben eine genaue gegenseitige Ausrichtung der beiden Formhälften einer zwischen zwei aufeinanderliegenden Backplatteneinheit ausgebildeten Backform beim Schließen der Backform bzw. Aufeinanderlegen der beiden Backplatteneinheiten.

Die stapelbaren Backplatteneinheiten können einstückig ausgebildet sein, wobei die an ihren Oberseiten und Unterseiten angeordneten Backflächen und Stapelflächen in den jeweiligen Plattenkörper integriert sind.

Die stapelbaren Backplatteneinheiten können jeweils aus einem von einer oberen Backplatte gebildeten Oberteil und einem von einer unteren Backplatte gebildeten Unterteil bestehen. Die oberen Backplatten bilden mit den an ihren Vorderseiten ausgebildeten unteren Backformhälften die Oberseiten der Backplatteneinheiten und mit den an ihren Rückseiten ausgebildeten Versteifungsrippen den oberen Teil der Begrenzungswände der Heizkanäle der Backplatteneinheit. Die unteren Backplatten bilden mit den an ihren Vorderseiten ausgebildeten oberen Backformhälften die Unterseiten der Backplatteneinheiten und mit den an ihren Rückseiten ausgebildeten Versteifungsrippen den unteren Teil der Begrenzungswände der Heizkanäle der Backplatteneinheit. Diese oberen und unteren Backplatten liegen an ihren Rückseiten mit den Stirnseiten ihrer Versteifungsrippen aufeinander und sind paarweise fix miteinander zur jeweiligen Backplatteneinheiten verbunden.

Diese beidseitig verwendbaren, stapelbaren Backplatteneinheiten, die einstückig ausgebildet sein können oder jeweils aus einem quaderförmigen Plattenkörper mit an der Ober- und Unterseite aufgesetzten Backplatten bestehen können oder jeweils aus zwei mit ihren Rückseiten aneinanderliegenden Backplatten zusammengesetzt sein können, werden zur Bildung von Backformen übereinandergestapelt und dabei mit ihren einander gegenseitig zugeordneten Stapelflächen von unten aneinandergelegt. Dabei wird jeweils eine an der Unterseite der oberen Backplatteneinheit ausgebildete, obere Formhälfte mit einer an der Oberseite der unteren Backplatteneinheit ausgebildeten, unteren Formhälfte einer Backform zusammengesetzt und diese Backform gleichzeitig geschlossen. Die von zwei aufeinanderliegenden Backplatteneinheiten nach oben und unten begrenzte geschlossene Backform kann einen einzigen Formhohlraum zum Herstellen von dünnwandigen Formkörpern enthalten. Diese Backform kann auch mehrere gleich große Formhohlräume zum gleichzeitigen Herstellen mehrerer dünnwandiger Formkörper in einer einzigen Backform enthalten. Diese Backform kann auch mehrere verschieden gestaltete Formhohlräume zum gleichzeitigen Herstellen mehrerer verschiedener dünnwandiger Formkörper in einer einzigen Backform enthalten.

Bei dem erfindungsgemäßen Stapel, der aus beidseitig verwendbaren, stapelbaren Backplatteneinheiten besteht, an seinem unteren Ende fortlaufend neu gebildet und an seinem oberen Ende fortlaufend wieder aufgelöst wird, werden die Backplatteneinheiten am unteren Ende des Stapels von unten übereinandergestapelt und am oberen Ende nach oben vereinzelt. In der dem unteren Ende des Stapels zugeordneten Beschickungsstation wird eine neue Backplatteneinheit an ihrer Oberseite mit Vorprodukt beschickt, bevor sie im nächsten Stapelvorgang in den mit seinem gesamten Gewicht auf seiner untersten Backplatteneinheit ruhenden Stapel integriert wird. Die neue Backplatteneinheit wird unter den Stapel befördert und von unten gegen die unterste Backplatteneinheit des Stapels angedrückt, bis sie als neue unterste Backplatteneinheit des Stapels dessen gesamtes Gewicht trägt. In diesem Stapelvorgang wird der Stapel an seinem unteren Ende um eine Backplatteneinheit ergänzt und gleichzeitig die an der Unterseite seiner untersten Backplatteneinheit ausgebildete obere Formhälfte mit der mit Vorprodukt beschickten unteren Formhälfte an der Oberseite der neuen Backplatteneinheit zu einer neuen geschlossenen Backform zusammengesetzt. Diese Backform ist in dem von den übereinander gestapelten Backplatteneinheiten gebildeten Backformenstapel die unterste Backform. Der Formhohlraum dieser Backform wird entgegen dem beim Backen entstehenden Innendruck durch das Gewicht des gesamten Stapels geschlossen gehalten. Diese Backform wandert zusammen mit den beiden ihren Formhohlraum begrenzenden Backplatteneinheiten mit jedem weiteren Stapelvorgang im Stapel um eine Etage nach oben und wird in jeder Etage durch das Gewicht des über dieser Etage liegenden Teiles des Stapels geschlossen gehalten. Am oberen Ende des Stapels wird der Formhohlraum dieser Backform nur mehr durch das Gewicht der ihn nach oben begrenzenden Backplatteneinheit geschlossen gehalten und mit dem Abheben dieser Backplatteneinheit beim Auflösen des Stapels ebenfalls aufgelöst. Der in diesem Formhohlraum hergestellte dünnwandige Formkörper bleibt auf der an der Oberseite der obersten Backplatteneinheit des Stapels ausgebildeten unteren Formhälfte liegen und kann von dieser direkt abgenommen werden.

Die beidseitig verwendbaren, stapelbaren Backplatteneinheiten werden in einem geschlossenen Kreislauf durch den jeweiligen Backofen transportiert und passieren den vertikalen Backschacht des Backofens in einem vertikalen Stapel, der aus liegend gestapelten Backplatteneinheiten besteht und am unteren Ende fortlaufend um eine Backplatteneinheit ergänzt und am oberen Ende fortlaufend um eine Backplatteneinheit verringert wird. Die beidseitig verwendbaren, stapelbaren Backplatteneinheiten erlauben es, den Bildungsvorgang des betreffenden Stapels mit dem Schließvorgang der Backformen zu kombinieren und den Auflösevorgang des betreffenden Stapels mit dem Öffnungsvorgang der Backformen zu kombinieren, sodaß für das Schließen der Backformen nach dem Beschicken mit Vorprodukt und für das Öffnen der Backformen vor dem Entnehmen der gebackenen Formkörper keinerlei zusätzliche Mechanismen oder Betätigungsvorrichtungen für die Backplatteneinheiten erforderlich sind. Die den Stapel erzeugende Stapelvorrichtung des Backofens stapelt die Backplatteneinheiten von unten übereinander und schließt dabei gleichzeitig die Backformen. Die den Stapel auflösende Vereinzelungsvorrichtung des Backofens nimmt die Backplatteneinheiten vom betreffenden Stapel nach oben ab und öffnet dabei gleichzeitig die Backformen bzw. löst diese in ihre Backformhälften auf.

Nachstehend wird die Erfindung an einem Ausführungsbeispiel anhand der Zeichnungen näher erläutert.

### Kurze Beschreibung der Zeichnungen:

In den Zeichnungen zeigen:
Fig. 1 schematisch einen Backofen mit einer vertikalen Transportstrecke zur Herstellung von dünnwandigen Formkörpern im Schnitt,
Fig. 2 schematisch einen Abschnitt der, den vertikalen Backschacht durchsetzten, vertikalen Transportstrecke zur Herstellung von dünnwandigen Formkörpern,
Fig. 3 einen Teil einer stapelbaren Backplatteneinheiten zur Herstellung von dünnwandigen Formkörpern im Querschnitt,
Fig. 4 den Teil der stapelbaren Backplatteneinheiten der Fig. 3 im Längsschnitt,
Fig. 5 eine Draufsicht auf den Teil der stapelbaren Backplatteneinheiten der Fig. 3,
Fig. 5a einen Abschnitt einer Dichtleiste der stapelbaren Backplatteneinheiten der Fig. 3 von der Seite,

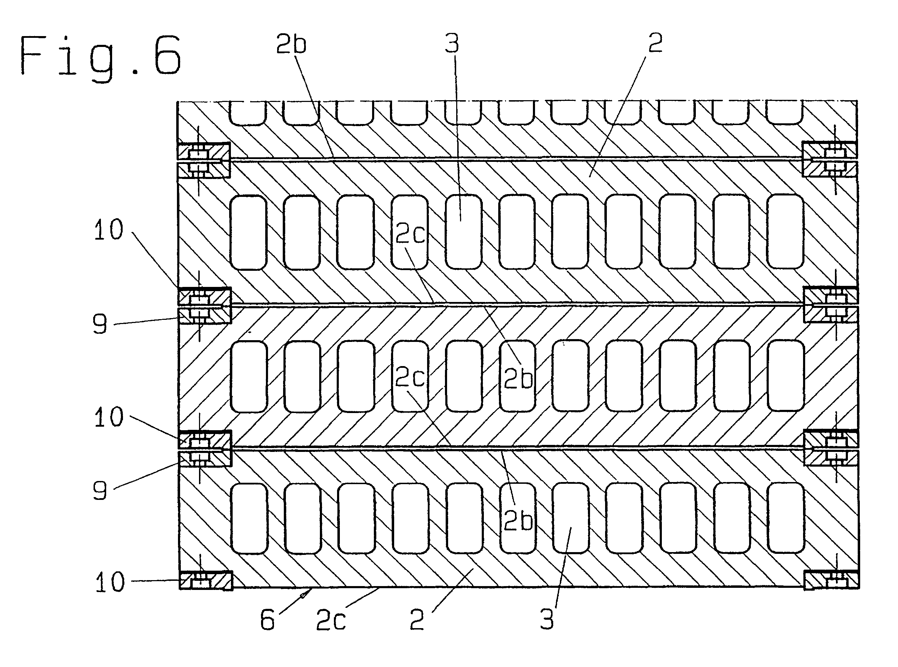

Fig. 6 einen Abschnitt eines, aus liegend übereinandergestapelten Backplatteneinheiten gebildeten, vertikalen Stapels, bei dem die Backplatteneinheiten innerhalb des Stapels lose aufeinanderliegen und nur durch das Gewicht zusammengehalten werden,

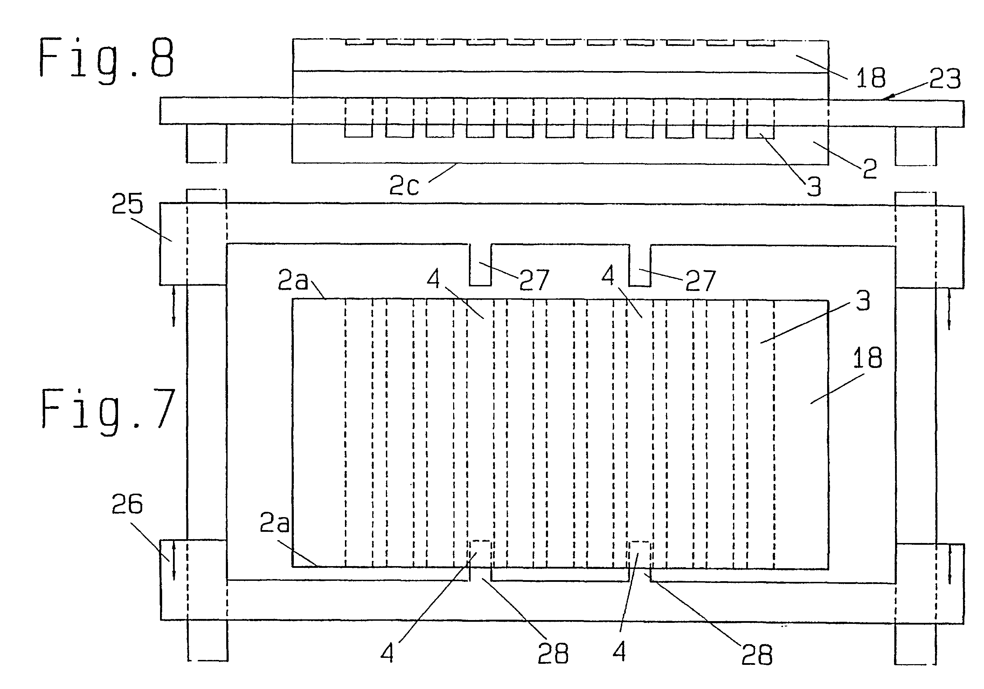

Fig. 7 eine am unteren Ende der vertikalen Transportstrecke zur Herstellung von dünnwandigen Formkörpern angeordnete Haltevorrichtung für einen, aus stapelbaren Backplatteneinheiten gebildeten vertikalen Stapel von oben. und
Fig. 8 die Haltevorrichtung der Fig. 7 von der Seite.

### Beschreibung eines bevorzugten Ausführungsbeispieles:

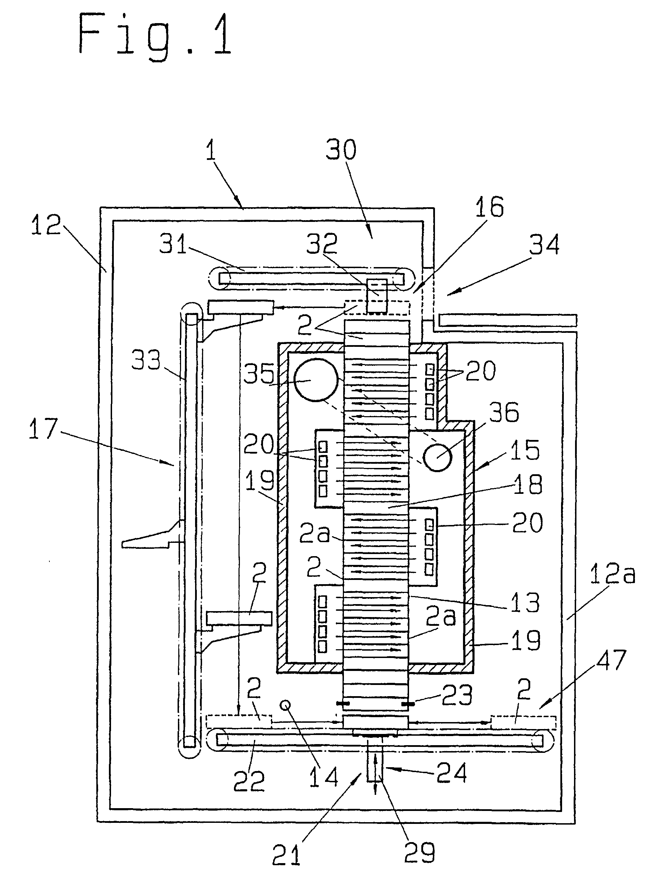

Fig. 1 zeigt einen mit Gas zu beheizenden Backofen 1 für die Herstellung von dünnwandigen Formkörpern, die beispielsweise als rechteckige ebene Blätter ausgebildet sind, die an ihren Ober- und Unterseiten jeweils ein von erhabenen Rippen gebildetes Waffelmuster tragen. Diese dünnwandigen Formkörper werden aus einer formlosen Masse in auf- und zumachbaren Backformen hergestellt, die jeweils aus zwei Formhälften bestehen, die die äußere Gestalt und die Wandstärke der dünnwandigen Formkörper bestimmen.

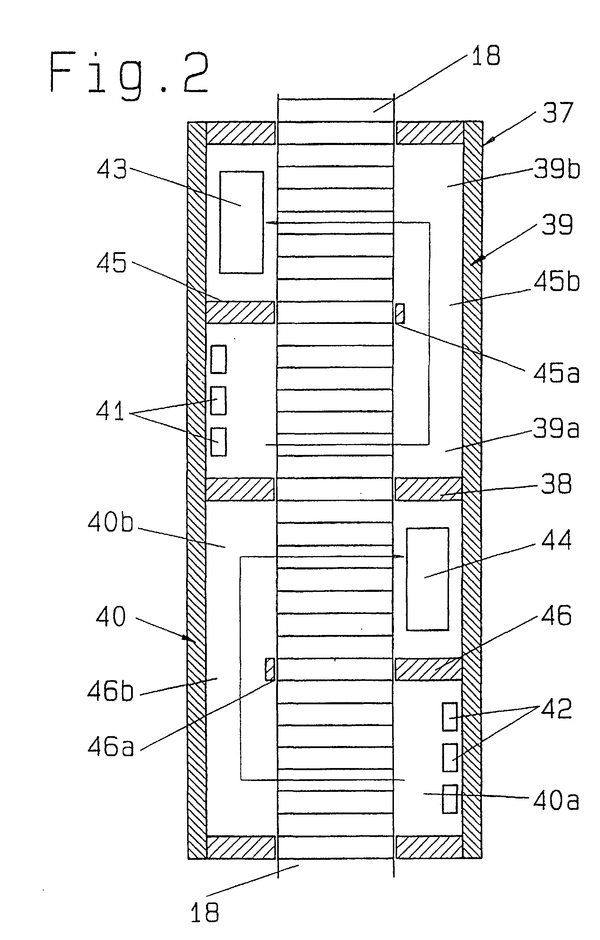

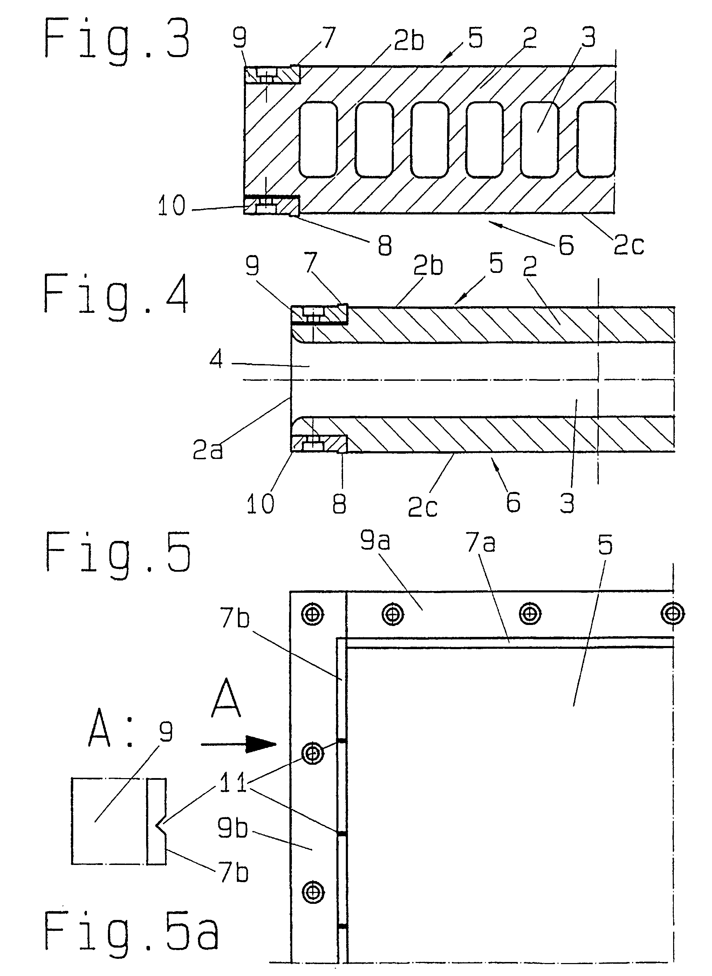

Zur Bildung der auf- und zumachbaren Backformen sind beidseitig verwendbare, stapelbare Backplatteneinheiten 2 (Fig. 2 - 5a) vorgesehen, deren quaderförmige Plattenkörper von innen über Heizkanäle 3 beheizbar sind und an zwei einander gegenüberliegenden Stirnseiten 2a mit seitlichen Halteöffnungen 4 versehen sind und an den Oberseiten 2b und Unterseiten 2c mit Backflächen 5, 6 und diesen zugeordneten Stapelflächen 7, 8 tragen. Die Oberseiten 2b der Backplatteneinheiten 2 sind jeweils als untere Formhälften der Backformen und die Unterseiten 2c der Backplatteneinheiten 2 sind jeweils als obere Formhälften der Backformen ausgebildet. Zwei übereinandergestapelte Backplatteneinheiten 2 liegen mit ihren einander zugewandten Stapelflächen 7, 8 aufeinander und bilden zusammen eine geschlossene Backform für die jeweils herzustellenden dünnwandigen Formkörper. Diese Backform besteht aus der, an der Unterseite 2c der oberen Backplatteneinheit 2 angeordneten, oberen Backformhälfte und aus der, auf der Oberseite 2d der unteren Backplatteneinheit 2 angeordneten, unteren Backformhälfte.

Die beidseitig verwendbaren, stapelbaren Backplatteneinheiten 2 sind mit den in sie jeweils integrierten Backformhälften jeweils auf die Herstellung eines bestimmten dünnwandigen Formkörpers abgestellt.

Backplatteneinheiten 2 für die Herstellung von rechteckigen ebenen Blättern weisen jeweils einen im wesentlichen rechteckigen Plattenkörper auf. An der Oberseite 2b und an der Unterseite 2c des Plattenkörpers ist jeweils eine von seitlichen Dichtleisten 9, 10 begrenzte, im wesentlichen ebene, rechteckige Backfläche 5, 6 ausgebildet. Die Stapelflächen 7, 8 der Backplatteneinheit 2 sind in diese Dichtleisten 9, 10 integriert, die jeweils über die von ihnen begrenzte Backfläche 5, 6 vorstehen und zusammen mit dieser die obere Backformhälfte 6, 10 bzw. untere Backformhälfte 5,9 der Backplatteneinheit 2 bilden. Bei der unteren Backformhälfte 5, 9 ist in zwei gegenüberliegenden Dichtleisten 9b jeweils zumindest ein die Dichtleiste 9b durchsetzender Dampfkanal 11 ausgebildet. Zwei übereinandergestapelte Backplatteneinheiten 2 liegen mit den Dichtleisten 9 und 10 ihrer einander zugewandten Backformhälften 5, 9 bzw. 6, 10 aufeinander und bilden eine geschlossene Backform, die bis auf die seitlichen Dampfkanäle 11, durch die die beim Backen in der Backform entstehenden Gase bei geschlossener Backform entweichen können, vollständig geschlossen ist.

Backplatteneinheiten für die Herstellung von runden, dreieckigen, fünfeckigen, oder fächerförmigen, ebenen Blättern können jeweils einen im wesentlichen rechteckigen Plattenkörper mit an seiner Oberseite und Unterseite angeordneten, runden, dreieckigen, fünfeckigen, oder fächerförmigen Backflächen aufweisen, die jeweils von seitlichen Dichtleisten begrenzt sind, in die die Stapelflächen der betreffenden Backplatteneinheit integriert sind. Diese Backplatteneinheiten können aber auch jeweils einen der Form der herzustellenden Blätter entsprechenden, quaderförmigen Plattenkörper mit rundem, dreieckigem, fünfeckigem, oder fächerförmigem Grundriß besitzen.

Backplatteneinheiten für die Herstellung von dünnwandigen Formkörpern, die als rechteckige, seichte nach oben offene Tasse ausgebildet sind, weisen einen, im wesentlichen rechteckigen Plattenkörper auf, der an seiner Oberseite eine, mit einer der Gestalt der Tasse entsprechenden Vertiefung versehene, obere Backfläche und an seiner Unterseite eine, mit einer der Gestalt der Tasse entsprechenden Erhebung versehene, untere Backfläche trägt. Beide Backflächen sind von seitlichen Dichtleisten begrenzt, die dem Umriß der Tasse entsprechen und die Stapelflächen der Backplatteneinheit enthalten.

Backplatteneinheiten für die Herstellung von dünnwandigen Formkörpern, die als ebene Blätter ohne genau definierte Ränder ausgebildet sind, weisen jeweils einen quaderförmigen Plattenkörper auf, an dessen Oberseite und Unterseite der jeweiligen Umrißform der herzustellenden ebenen Blätter entsprechende ebene Backflächen und außerhalb dieser die Wandstärke der Formkörper bestimmende Abstandshalter angeordnet sind, in die die oberen bzw. unteren Stapelflächen der Backplatteneinheit integriert sind.

In dem in Fig. 1 dargestellten Backofen 1 werden die beidseitig verwendbaren, stapelbaren Backplatteneinheiten 2 innerhalb der äußeren wärmeisolierenden Verkleidung 12 des Backofens 1 in einem in sich geschlossenen Kreislauf durch den Backofen 1 transportiert. Dieser Kreislauf umfaßt eine vertikal nach oben führende Transportstrecke 13, an deren Anfang die Backplatteneinheiten 2 zur Bildung von geschlossenen Backformen übereinandergestapelt werden und an deren Ende die Backplatteneinheiten 2 zur Auflösung der Backformen wieder vereinzelt werden. Diese vertikale Transportstrecke 13 für die geschlossenen Backformen führt von einer unteren Beschickungsstation 14 durch einen als vertikaler Backschacht 15 ausgebildeten Backraum zu einer oberen Entnahmestation 16. Von der Entnahmestation 16 werden die vereinzelten Backplatteneinheiten 2 an eine, außerhalb des Backschachtes 15 gelegene, vertikal nach unten führende Transportstrecke 17 übergeben und in dieser einzeln abgesenkt, bevor sie wieder der vertikal nach oben führende Transportstrecke 13 zugeführt werden.

Die geschlossenen Backformen und die sie bildenden Backplatteneinheiten 2 werden durch den sich fortlaufend erneuernden Stapel 18, der aus den lose aufeinanderliegenden und nur durch das Gewicht zusammengehaltenen Backplatteneinheiten 2 besteht, durch den Backschacht 15 hindurch nach oben transportiert.

Der Backschacht 15 wird innerhalb des Backofens 1 durch eine wärmeisolierende Hülle 19 nach außen begrenzt. Innerhalb des Backschachtes 15 sind entlang dem Stapel 18 Gasbrenner 20 vertikal übereinander angeordnet. Die von diesen erzeugten Heizgase strömen durch die Heizkanäle 4 der Backplatteneinheiten 2 hindurch durch den Stapel 18 und beheizen so die im Stapel 18 enthaltenen geschlossenen Backformen mit den in ihnen eingeschlossenen Vorprodukten.

Der Stapel 18 wird unterhalb des Backschachtes 15 durch eine Stapelvorrichtung 21 aus den einzelnen von einem unteren Horizontalförderer 22 zugeführten Backplatteneinheiten 2 fortlaufend neu gebildet. Die Stapelvorrichtung 21 besteht aus einer dem unteren Ende des Stapels 18 zugeordneten Haltevorrichtung 23 und einer unter dem Stapel angeordneten Hubvorrichtung 24.

Die Haltevorrichtung 23 steht mit der untersten Backplatteneinheit 2 des Stapels 18 im Eingriff, auf der das Gewicht des gesamten Stapels 18 ruht. Die Haltevorrichtung 23 umfaßt zwei Schlitten 25, 26, die in einer horizontalen Ebene einander gegenüberliegen. Diese Schlitten 25, 26 sind im Gestell des Backofens 1 vertikal abgestützt und tragen an ihren einander zugewandten Stirnseiten horizontale Haltebolzen 27, 28, die in die seitlichen Halteöffnungen 4 der untersten Backplatteneinheit 2 des Stapels 18 ragen und das Gewicht des gesamten Stapels 18 tragen. Während eines Stapelvorganges werden die beiden Schlitten 25, 26 zuerst zum Freigeben des Stapels 18 auseinandergezogen und dabei mit ihren Haltebolzen 27, 28 aus der untersten Backplatteneinheit 2 des Stapels 18 herausgezogen und dann zum Festhalten des Stapels 18 wieder zusammengeschoben und dabei mit ihren Haltebolzen 27, 28 in die Halteöffnungen 4 der neuen untersten Backplatteneinheit 2 des Stapels 18 hineingeschoben.

Die zu stapelnden Backplatteneinheiten 2 werden vom unteren Horizontalförderer 22 durch eine Beschickungsstation 14 transportiert, die der vertikalen Transportstrecke 13 und dem unteren Ende des Stapels 18 vorgelagert ist. Diese Beschickungsstation 14 kann beispielsweise als Aufgießstation ausgebildet sein, in der jeweils eine dosierte Menge eines als formlose Masse ausgebildeten Vorproduktes auf die Oberseite 2b der jeweiligen Backplatteneinheit 2 aufgegossen wird. Die an der Oberseite 2b mit Vorprodukt beschickte Backplatteneinheit 2 wird vom unteren Horizontalförderer 22 unter den Stapel 18 transportiert und dort von einem vertikal verfahrbaren Stempel 29 der Hubvorrichtung 24 vom unteren Horizontalförderer 22 abgehoben. Dieser Stempel 29 drückt die neu in den Stapel 18 zu integrierende Backplatteneinheit 2 von unten gegen die unterste Backplatteneinheit 2 des Stapels 18, übernimmt dessen gesamtes Gewicht und integriert damit diese Backplatteneinheit 2 als neue untersten Backplatteneinheit 2 in den Stapel 18. Nach dem Freigeben der bisherigen untersten Backplatteneinheit 2 des Stapels 18 durch die Haltevorrichtung 23 hebt der Stempel 29 der Hubvorrichtung 24 den gesamten Stapel 18 um die Höhe einer Backplatteneinheit 2 an. Anschließend wird die Haltevorrichtung 23 mit der neuen untersten Backplatteneinheit 2 des Stapels 18 in Eingriff gebracht und der Stapel 18 von der Hubvorrichtung 24 auf der Haltevorrichtung 23 abgesetzt.

Der Stapel 18 wird oberhalb des Backschachtes 15 durch eine Vereinzelungsvorrichtung 30 fortlaufend in einzelne Backplatteneinheiten 2 aufgelöst, welche einen von einem oberen Horizontalförderer 31 getragenen Greifkopf 32 umfaßt, der jeweils die oberste Backplatteneinheit 2 des Stapels 18 elektromagnetisch oder mechanisch ergreift, vom Stapel 18 abhebt und an den Vertikalförderer 33 der außerhalb des Backschachtes 15 gelegenen, vertikal nach unten führenden Transportstrecke 17 weitergibt. Wenn der Greifkopf 32 die oberste Backplatteneinheit 2 vom Stapel 18 abhebt, wird die von dieser Backplatteneinheit 2 bisher nach oben begrenzte oberste Backform des Stapels 18 aufgelöst. Der in dieser Backform gebackene Formkörper bleibt auf der Oberseite der diese Backform bisher nach unten begrenzenden Backplatteneinheit 2 liegen. Letztere ist nunmehr die oberste Backplatteneinheit 2 des Stapels 18, deren Oberseite die Oberseite des Stapels 18 bildet.

Die im Stapel 18 gebackenen Formkörper werden in der Entnahmestation 16 jeweils von der Oberseite des Stapels 18 beispielsweise mittels eines (nicht dargestellten) Saugkopfes abgenommen und einer dem oberen Ende des Stapels 18 benachbarten Ausgabestation 34 zugeführt, in der sie aus dem Backofen 1 ausgegeben werden.

In dem vom Stapel 18 durchsetzten Backschacht 15 (Fig. 1) können die Gasbrenner 20 an zwei gegenüberliegenden Seiten des Stapels 18 abwechselnd gegeneinander versetzt vertikal übereinander angeordnet sein. Die auf einer Seite des Stapels 18 in die Heizkanäle 4 der Backplatteneinheiten 2 einströmenden Heizgase treten nach dem Durchströmen der Backplatteneinheiten 2 auf der gegenüberliegenden Seite des Stapels 18 in den Backschacht 15 aus. Die Heizgase verlassen den Backschacht 15 zusammen mit den aus den geschlossenen Backformen des Stapels 18 ausströmenden Backgasen durch zwei obere Abzugsöffnungen 35, 36. Die Gasbrenner 20 und die ihnen zugeordnete Abzugsöffnung 35 bzw. 36 des Backschachtes 15 sind auf verschiedenen Seiten des Stapels 18 angeordnet.

Gemäß einem alternativen Ausführungsbeispiel (Fig. 2) kann der Backschacht 37 durch eine horizontale Trennwand 38 in zwei übereinander angeordnete Teilschächte 39, 40 unterteilt sein, in denen die Gasbrenner 41, 42 und die ihnen zugeordnete Abzugsöffnung 43, 44 jeweils auf der gleichen Seite des Stapels 18 vertikal übereinander angeordnet sind. Jeder Teilschacht 39, 40 enthält eine untere Heizzone 39a bzw. 40a, in der die Gasbrenner 41 bzw. 42 angeordnet sind, und eine obere Heizzone 39b bzw. 40b, in der eine Abzugsöffnung 43 bzw. 44 des Backschachtes 39 bzw. 40 angeordnet ist. Die Gasbrenner 41 bzw. 42 und die Abzugsöffnung 43 bzw. 44 werden jeweils durch einen horizontalen Zwischenboden 45 bzw. 46 voneinander getrennt, in dem eine mittige Durchtrittsöffnung 45a bzw. 46a für den Durchtritt des Stapels 18 und eine seitliche Bodenöffnung 45b bzw. 46b für den Durchtritt der Heizgase und Backgase von der unteren Heizzone 39a bzw. 40a in die obere Heizzone 39b bzw. 40b ausgebildet ist.

Der unterhalb des Backschachtes 15 angeordnete, untere Horizontalförderer 22 erstreckt sich über das untere Ende des Stapels 18 hinaus bis zu einer dem Stapel 18 benachbarten, in Fig. 1 rechts dargestellten Seitenwand 12a des Backofens 1 benachbarten Ausgabestation 47 für die stapelbaren Backplatteneinheiten 2, der eine (nicht dargestellte) Wartungstüre in der Seitenwand 12a des Backofens 1 zugeordnet ist.

Über die Ausgabestation 47 für die stapelbaren Backplatteneinheiten 2 kann eine Backplatteneinheit 2, die von der vertikal nach unten führenden Transportstrecke 17 an den unteren Horizontalförderer 22 übergeben wurde, vom unteren Horizontalförderer 22 am unteren Ende des Stapels 18 vorbei zur Ausgabestation 47 befördert und dort aus dem Backofen 1 ausgegeben werden. Nach der Reinigung bzw. Wartung der Backplatteneinheit 2 kann diese über die Ausgabestation 47 wieder in den Backofen 1 eingegeben und vom unteren Horizontalförderer 22 der Stapelvorrichtung 21 zugeführt werden, ohne den Backofen 1 oder Teile des Backofens 1 demontieren oder zerlegen zu müssen.

Die Ausgabestation 47 für die stapelbaren Backplatteneinheiten 2 erlaubt es, die Backplatteneinheiten 2 des Backofens 1 einzeln über die Ausgabestation 47 gegen andere Backplatteneinheiten 2 auszutauschen und dadurch den Backofen 1 auf die Herstellung eines anderen dünnwandigen Formkörpers umzurüsten. So können beispielsweise für die Herstellung von ebenen Blättern vorgesehene, stapelbare Backplatteneinheiten 2 gegen für die Herstellung von seichten Tassen vorgesehene, stapelbare Backplatteneinheiten 2 ausgetauscht werden.

Der, die im Backofen 1 vertikal nach oben führende Transportstrecke 13 bildende Stapel 18 besteht aus aufeinanderliegenden Backplatteneinheiten 2, die an seinem unteren Ende durch aufeinanderfolgende Stapelvorgänge der unteren Stapelvorrichtung 21 nacheinander in den Stapel 18 integriert und nach dem Durchwandern des Stapels 18 und des Backschachtes 15 am oberen Ende des Stapels 18 durch die obere Vereinzelungsvorrichtung 30 nacheinander vom Stapel 18 wieder abgenommen werden.

Bei jedem Stapelvorgang wird eine, auf ihrer Oberseite 2a mit Vorprodukt bereits beschickte, neue Backplatteneinheit 2 von unten in den Stapel 18 integriert. Die neue Backplatteneinheit 2 wird vom unteren Horizontalförderer 22 unter das untere Ende des Stapels 18 transportiert und durch den Stempel 29 der unterhalb angeordneten Hubvorrichtung 24 vom unteren Horizontalförderer 22 abgehoben, zum unteren Ende des Stapels 18 hin angehoben und mit der Oberseite 2a gegen die Unterseite des Stapels 18 gedrückt. Anschließend wird die neue Backplatteneinheit 2 samt dem auf ihr lastenden Stapel 18 durch den Stempel 29 der Hubvorrichtung 24 weiter angehoben und der Stapel 18 mit seiner bisherigen untersten Backplatteneinheit 2 von den horizontalen Haltebolzen der ihm zugeordneten Haltevorrichtung 23 abgehoben. Die Haltebolzen werden durch das horizontale Auseinanderfahren der sie tragenden Schlitten aus der bisherigen untersten Backplatteneinheit 2 des Stapels 18 herausgezogen. Der Stapel 18 wird vom Stempel 29 der Hubvorrichtung 24 weiter angehoben bis die seitlichen Halteöffnungen der neuen und nunmehr untersten Backplatteneinheit 2 des Stapels 18 auf die horizontalen Haltebolzen der Haltevorrichtung 23 ausgerichtet sind. Jetzt werden die beiden Schlitten der Haltevorrichtung 23 zusammengeschoben und die Haltebolzen in die Halteöffnungen der neuen untersten Backplatteneinheit 2 des Stapels 18 hineingeschoben. Anschließend wird der Stempel 29 der Hubvorrichtung 24 bis in seine untere Ausgangsposition abgesenkt, wobei er zuerst den Stapel 18 auf den Haltebolzen der Haltevorrichtung 23 absetzt, bevor er alleine unter die Transportebene des unteren Horizontalförderers 22 abgesenkt wird. Anschließend transportiert der untere Horizontalförderer 22 die nächste auf ihrer Oberseite 2a mit Vorprodukt bereits beschickte Backplatteneinheit 2 unter das unteren Ende des Stapels 18 und der nächste Stapelvorgang beginnt.

Bei jedem Stapelvorgang wird die auf der Oberseite 2a der zu integrierenden Backplatteneinheit 2 ausgebildete und bereits mit Vorprodukt beschickte, untere Formhälfte mit ihren nach oben weisenden Dichtleisten von unten auf die nach unten weisenden Dichtleisten der auf der Unterseite 2b der untersten Backplatteneinheit 2 des Stapels 18 ausgebildeten oberen Formhälfte aufgesetzt und die beiden Formhälften werden zu einer geschlossenen Backform zusammengesetzt.

Mit jedem Stapelvorgang wird am unteren Ende des Stapels 18 aus zwei Formhälften eine neue geschlossene Backform gebildet, deren Formhohlraum nach oben und unten durch die einander zugewandten Backflächen der beiden untersten Backplatteneinheiten 2 des Stapels 18 und seitlich durch die aufeinanderliegenden Dichtleisten dieser beiden Backplatteneinheiten begrenzt ist. Dieser Formhohlraum ist bis auf die in den einander horizontal gegenüberliegenden Dichtleisten ausgebildeten Dampfschlitze vollständig geschlossen. Die mit dem Stapelvorgang beim Schließen der Backform in deren Formhohlraum eingeschlossene, formlose Masse wird zu einem als ebenes Blatt ausgebildeten dünnwandigen Formkörper gebacken, während der Formhohlraum zusammen mit den beiden ihn begrenzenden Backplatteneinheiten 2 im Stapel 18 schrittweise nach oben durch den Backschacht 15 wandert. Während dieses Backprozesses wird die formlose Masse durch die in ihr entstehenden Backgase aufgeschäumt und im Formhohlraum verteilt, bevor die Backgase den Formhohlraum durch die Dampfschlitze verlassen und aus der geschlossenen Backform in den Backschacht 15 strömen. Dem beim Backprozeß im Formhohlraum entstehenden Innendruck, der in der Anfangphase des Backprozesses rasch ansteigt und nach kurzer Zeit wieder rasch abfällt, wirkt das Gewicht des jeweils über dem Formhohlraum liegenden Teiles des Stapels 18 entgegen. Der Formhohlraum wandert im Stapel 18 mit jedem weiteren Stapelvorgang um eine Etage nach oben und der über ihm liegende Teil des Stapels 18 wird mit jeder an seinem oberen Ende vereinzelten Backplatteneinheit 2 kleiner und leichter. Während des gesamten Backprozesses ist der im Formhohlraum entstehende Innendruck stets deutlich kleiner, als der auf dem Formhohlraum von oben lastende Druck des Gewichtes des über ihm liegenden Teiles des Stapels 18. Dies wird durch das hohe Gewicht des Stapels 18 erreicht, das durch das Gewicht der einzelnen Backplatteneinheiten 2 und die Anzahl der übereinandergestapelten Backplatteneinheiten 2 bestimmt wird.

Am oberen Ende des Stapels 18 wird der Formhohlraum nur mehr durch das Gewicht der ihn nach oben begrenzenden Backplatteneinheit 2 geschlossen gehalten und mit dem Abheben dieser Backplatteneinheit 2 beim Auflösen des Stapels 18 ebenfalls aufgelöst. Zum Vereinzeln der Backplatteneinheiten 2 am oberen Ende des Stapels 18 wird der Greifer 74 des oberen Horizontalförderers 31 über das obere Ende des Stapels 18 gefahren und abgewartet bis der Stapel 18 im Zuge eines Stapelvorganges von der unter ihm angeordneten Hubvorrichtung 24 bis in seine oberste Position angehoben ist. Dann erfaßt der Greifkopf 32 die oberste Backplatteneinheit 2 des Stapels 18 und hält sie fest, während der Stapel 18 durch die Hubvorrichtung 24 wieder abgesenkt wird und die bisher zweitoberste und nunmehr oberste Backplatteneinheit 2 von der vom Greifkopf 31 gehaltenen Backplatteneinheit 2 nach unten entfernt wird. Dadurch wird die vorher von den beiden obersten Backplatteneinheiten 2 des Stapels 18 gebildete Backform aufgelöst, wobei der gebackene Formkörper auf der Oberseite der nunmehr obersten Backplatteneinheit 2 des Stapels 18 liegen bleibt und von dort abgenommen wird, während der Greifkopf 31 die abgenommene Backplatteneinheit 2 zum oberen Ende des außerhalb des Backschachtes 15 gelegenen Vertikalförderer 33 transportiert. Der Greifkopf 32 des oberen Horizontalförderers 31 wird wieder über das obere Ende des Stapels 18 gefahren, bevor dieser im Zuge seines nächsten Stapelvorganges von seiner Hubvorrichtung 24 neuerlich bis in seine oberste Position angehoben wird und bei ihm der nächste Vereinzelungsvorgang beginnt.

## Patentansprüche

1. Backofen (1) für die Herstellung von dünnwandigen Formkörpern in jeweils aus zwei Formhälften bestehenden, auf- und zumachbaren Backformen, die mit ihren Formhälften die äußere Gestalt der in ihnen hergestellten Formkörper bestimmen, bei welchem Backofen einen geschlossenen Kreislauf durchlaufende, übereinanderstapelbare Backplatteneinheiten (2) vorgesehen sind, die an ihren Oberseiten die unteren Formhälften der Backformen und an ihren Unterseiten die oberen Formhälften der Backformen tragen und paarweise aufeinanderliegend geschlossene Backformen bilden, wobei jede Backplatteneinheit an ihrer Oberseite in einer unteren Beschickungsstation (14) des Backofens mit Vorprodukt beschickt und dann in einen vertikalen, aus Backplatteneinheiten bestehenden, sich auf einer unteren Haltevorrichtung abstützenden, vertikalen Stapel integriert wird, der sich durch einen vertikalen Backschacht (15) hindurch nach oben zu einer oberen Entnahmestation (16) für die gebackenen Formkörper erstreckt und an seinem oberen Ende fortlaufend in einzelne Backplatteneinheiten aufgelöst wird, wobei der Stapel an seinem unteren Ende von einer Stapelvorrichtung (21) durch fortlaufendes Hinzufügen einer mit Vorprodukt beschickten Backplatteneinheit fortlaufend neu gebildet wird und die von den Backplatteneinheiten gebildeten. Backformen im Stapel schrittweise nach oben und durch den Backschacht (15) wandern, während die in den Backformen enthaltenen Vorprodukte zu dünnwandigen Formkörpern gebacken werden, **dadurch gekennzeichnet, daß** die Backplatteneinheiten (2) innerhalb des Stapels nur lose aufeinanderliegen und jede einzelne, von zwei aufeinanderliegenden Backplatteneinheiten gebildete Backform entgegen dem in ihr beim Backen entstehenden Innendruck nur durch das Gewicht des jeweils auf ihr lastenden Teiles des Stapels geschlossen gehalten wird, während sie innerhalb des Stapels schrittweise nach oben, durch den vertikalen Backschacht (15) hindurch zur oberen Entnahmestation (16) wandert.

2. Backofen nach Anspruch 1, **dadurch gekennzeichnet, daß** oberhalb des Backschachtes (15) eine Vereinzelungsvorrichtung (30) vorgesehen ist, die nacheinander die Backplatteneinheiten zum Auflösen des Stapels und zum Öffnen der Backformen vom oberen Ende des Stapels abnimmt.

3. Backofen nach Anspruch 1 oder 2, **dadurch gekennzeichnet, daß** außerhalb des Backschachtes (15) ein eigener, zur Transportrichtung des Stapels gegenläufiger Vertikalförderer (33) zum Rücktransport der Backplatteneinheiten zur unteren Beschickungsstation (14) vorgesehen ist.

4. Backofen nach einem der Ansprüche 1 - 3, **dadurch gekennzeichnet, daß** die Backplatteneinheiten (2) jeweils mit einander gegenseitig zugeordneten oberen bzw. unteren Stapelflächen (7,8) versehen sind, mit denen sie innerhalb des Stapels lose aufeinanderliegen.

5. Backofen nach einem der Ansprüche 1-4, **dadurch gekennzeichnet, daß** an den Oberseiten (2b) der Backplatteneinheiten (2) jeweils mehrere, als untere Backformhälften (5,9) ausgebildete Backformteile nebeneinander angeordnet sind und daß an den Unterseiten (2c) der Backplatteneinheiten (2) jeweils mehrere, als obere Backformhälften (6,10) ausgebildete Backformteile nebeneinander angeordnet sind.

6. Backofen nach einem der Ansprüche 1 - 5, **dadurch gekennzeichnet, daß** die den Oberseiten (2b) zugeordneten, oberen Stapelflächen (7) der Backplatteneinheiten (2) jeweils in die Dichtleisten (9) der an den Oberseiten (2b) der Backplatteneinheiten (2) angeordneten, unteren Backformhälften (5,9) integriert sind und daß die den Unterseiten (2c) der Backplatteneinheiten zugeordneten, unteren Stapelflächen (8) jeweils in die Dichtleisten (10) der an den Unterseiten (2c) der Backplatteneinheiten angeordneten oberen Backformhälften (6,10) integriert sind, wobei die Backplatteneinheiten (2) innerhalb des von ihnen gebildeten Stapels mit den Dichtleisten (9,10) ihrer Backformhälften lose aufeinanderliegen.

## Claims

1. A bakers' oven (1) for making thin-walled shaped products in openable and closeable baking moulds each consisting of two mould halves, which with their mould halves determine the outer form of the shaped product made in them, in which oven stackable baking plate units (2) are provided passing through a closed circulation system, which on their upper sides carry the lower mould halves of the baking moulds and on their lower sides carry the upper mould halves of the baking moulds, and in pairs form closed baking moulds lying one upon the other, wherein each baking plate unit is loaded on its upper side with raw product in a lower loading station (14) of the oven and then is integrated into a vertical stack consisting of baking plate units and supported on a lower support device, the stack extending upwards through a vertical baking shaft (15) to an upper unloading station (16) for the baked shapes and being broken up at its upper end continuously into separate baking plate units, wherein the stack is continuously reformed at its lower end by a stacking device (21) by continuous addition of a baking plate unit loaded with raw product and the baking moulds formed by the baking plate units travel gradually upwards and through the baking shaft (15), while the raw products contained in the baking moulds are baked into thin-walled shaped products, **characterised in that** the baking plate units (2) within the stack only lie loosely on each other and each individual baking mould made up of two baking plate units one on the other is held shut against the internal pressure arising in it during baking only by the weight of the stack resting on it, as it travels within the stack gradually upwards through the vertical baking shaft (15) to the upper unloading station (16).

2. An oven according to claim 1, **characterised in that** a dissociating device (30) is provided above the baking shaft (15) which takes the baking plate units one after the other from the upper end of the stack so as to break up the stack and to open the baking moulds.

3. An oven according to claim 1 or 2, **characterised in that** a separate vertical conveyor (33) running in the opposite direction to the direction of travel of the stack is provided outside the baking shaft (15) for the return transport of the baking plate units to the lower loading station (14).

4. An oven according to any of claims 1 to 3, **characterised in that** the baking plate units (2) are each provided with mutually corresponding upper and lower stacking surfaces (7, 8) with which they lie on top of each other within the stack.

5. An oven according to any of claims 1 to 4, **characterised in that** on the upper sides (2b) of the baking plate units (2) several baking mould parts are arranged next to each other as lower baking mould halves (6, 10) and that on the lower sides (2c) of the baking plate units (2) several baking mould parts are arranged next to each other as upper mould halves (6,10).

6. An oven according to any of claims 1 to 5, **characterised in that** the upper stacking surfaces (7) of the baking plate units (2) corresponding to the upper sides (2b) are respectively integrated into the sealing strips (9) of the lower mould halves (5, 9) arranged on the upper side (2b) of the baking plate units (2), and **in that** the lower stacking surfaces (8) corresponding to the lower sides (2a) of the baking plate units are respectively integrated into the sealing strips (10) of the upper mould halves arranged on the lower sides of the baking plate units, the baking plate units (2) within the stack that they form lying loosely one upon the other with the sealing strips (9, 10) of their baking mould halves.

## Revendications

1. Four (1) pour la production de corps moulés à parois minces dans des moules de cuisson constitués de deux demi-moules et pouvant être ouverts et être fermés, qui déterminent, par leur demi-moule, la forme extérieure du corps moulé qui y est produit, four dans lequel il est prévu des unités (2) formant plaques de cuisson, passant suivant un circuit fermé, pouvant être empilées les unes au-dessus des autres, portant sur leur côté supérieur les demi-moules inférieurs des moules de cuisson et sur leur côté inférieur les demi-moules supérieurs des moules de cuisson et formant par paire des moules de cuisson fermés les uns au-dessus des autres, chaque unité formant plaque de cuisson étant chargée sur son côté supérieur dans un poste (14) de recouvrement inférieur d'une ébauche et ensuite étant intégrée à une pile verticale, constituée d'unité formant plaque de cuisson s'appuyant sur un dispositif de support inférieur, pile verticale, qui s'étend dans un puits (15) de cuisson vertical vers le haut jusqu'à un poste (16) supérieur de prélèvement des corps moulés cuits et qui, à son extrémité supérieurs, est séparée en continu en unités de plaques de cuisson individuelles, la pile étant formée de nouveau en continu à son extrémité inférieure par un dispositif (21) d'empilement par addition en continu d'une unité formant plaque de cuisson chargée d'une ébauche et les moules de cuisson formés par les unités formant plaque de cuisson se déplaçant dans la pile par étape vers le haut et passant dans le puits (15) de cuisson, tandis que les ébauches contenues dans les moules de cuisson sont cuits en des corps moulés à parois minces, **caractérisé en ce que** les unités (2) formant plaque de cuisson sont maintenues à l'intérieur de la pile uniquement de manière lâche les unes au-dessus des autres et chaque moule de cuisson individuel formé de deux plaques de cuisson se trouvant l'une au-dessus de l'autre est maintenu fermé à l'encontre de la pression intérieure se formant lors de la cuisson uniquement par le poids de la partie de la pile qui porte sur lui, pendant qu'il se déplace à l'intérieur de la pile pas à pas vers le haut, dans le puits (15) de cuisson vertical vers le poste (16) supérieur de prélèvement.

2. Four suivant la revendication 1, **caractérisé en ce qu'**il est prévu au-dessus du puits (15) de cuisson un dispositif (30) de séparation, qui prend les unes après les autres, pour la décomposition de la pile et l'ouverture du moule de cuisson, les unités formant plaque de cuisson à partir de l'extrémité supérieure de la pile.

3. Four suivant la revendication 1 ou 2, **caractérisé en ce qu'**il est prévu à l'extérieur du puits (15) de cuisson un transporteur (33) vertical, propre, s'étendant dans la direction de transport de la pile pour le retour des unités formant plaque de cuisson au poste (14) de recouvrement inférieur.

4. Four suivant l'une des revendications 1 à 3, **caractérisé en ce que** les unités (2) formant plaque sont munies chacune respectivement de surfaces (7, 8) d'empilement supérieure et inférieure associées mutuellement, par lesquelles elles reposent les unes sur les autres de manière lâche à l'intérieur de la pile.

5. Four suivant l'une des revendications 1 à 4, **caractérisé en ce que** sur les côtés (2b) supérieurs des unités (2), formant plaque de cuisson sont disposées respectivement plusieurs parties de moules de cuisson réalisées sous la forme de moitié (9, 10) de moules de cuisson inférieurs (5,9) les unes à côté des autres, et **en ce que** sur le côté (2c) inférieur de l'unité (2) formant plaque de cuisson sont disposées les unes à côté des autres plusieurs parties de moules de cuisson réalisées en tant que moitié (5, 9) de moules de cuisson supérieurs (6,10).

6. Four suivant l'une des revendications 1 à 5, **caractérisé en ce que** les surfaces (7) d'empilement supérieures associées au côté (2b) supérieur des unités (2) formant plaque de cuisson sont respectivement intégrées dans les réglettes (8) d'étanchéité des moitiés (6c) de moules de cuisson inférieurs (5,9) disposées sur le côté (2b) supérieur des unités (2) formant plaque de cuisson, et **en ce que** les surfaces (8) d'empilement inférieures associées aux côtés (2a) inférieurs des unités formant plaque de cuisson sont intégrées respectivement dans les réglettes (10) d'étanchéité des moitiés de moule de cuisson supérieures (6,10) disposées sur le côté (2c) inférieur des unités formant plaque de cuisson, les unités (2) formant plaque de cuisson étant disposées les unes au-dessus des autres de manière lâche par les réglettes (9, 10) d'étanchéité de leur moitié de moule de cuisson, à l'intérieur de la pile formée par les plaques.
